# EUROPÄISCHE PATENTSCHRIFT

(11) **EP 3 260 228 B1**
(45) Veröffentlichungstag und Bekanntmachung des Hinweises auf die Patenterteilung: **21.10.2020**
(21) Anmeldenummer: 17174796.7
(22) Anmeldetag: 07.06.2017
(51) Int. Cl.: B23D 55/08, B23D 47/00, B27B 5/38

(54) **SÄGEMASCHINE UND FÜHRUNGSEINRICHTUNG FÜR EIN SÄGEBAND ODER SÄGEBLATT EINER SÄGEMASCHINE**
SAWING MACHINE AND GUIDING DEVICE FOR A SAW BAND OR SAW BLADE OF A SAWING MACHINE
MACHINE À SCIER ET DISPOSITIF DE GUIDAGE POUR UNE LAME DE SCIE OU RUBAN DE SCIE D'UNE MACHINE À SCIER

(30) Priorität: 23.06.2016 DE 102016111545
(43) Veröffentlichungstag der Anmeldung: 27.12.2017
(73) Patentinhaber: KEURO Besitz GmbH & Co. EDV-Dienstleistungs KG, 77855 Achern (DE)
(72) Erfinder: Krebber, Sönke Florian, 76530 Baden-Baden (DE); Stolzer, Armin, 76530 Baden-Baden (DE)
(74) Vertreter: Lemcke, Brommer & Partner Patentanwälte Partnerschaft mbB

(56) Entgegenhaltungen:
- EP-A1- 0 456 223
- EP-A1- 2 492 036
- DE-A1- 19 653 242
- DE-A1-102011 050 189
- SU-A1- 923 804
- US-A1- 2015 090 086
- US-A1- 2015 158 097

## Beschreibung

Die vorliegende Erfindung betrifft eine Führungseinrichtung für ein Sägeband oder Sägeblatt einer Sägemaschine mit den Merkmalen des Oberbegriffs des Patentanspruchs 1, sowie eine Sägemaschine mit einer solchen Führungseinrichtung.

Eine solche Sägemaschine ist insbesondere zum Sägen von metallischen und/oder mineralischen Werkstoffen sowie Verbundwerkstoffen vorgesehen und umfasst ein Sägewerkzeug, das für eine Sägevorschubbewegung relativ zum Werkstück bewegbar ist. Hierbei wird das Sägewerkzeug in einer umlaufenden Sägebewegung angetrieben, um die spanabhebende Funktion des Sägewerkzeugs innerhalb des Werkstücks zu gewährleisten. Das Werkstück ist hierbei üblicherweise auf einem Maschinentisch eingespannt.

Wenn das Sägewerkzeug ein umlaufendes Sägeband ist und es sich bei der Sägemaschine demnach um eine Bandsägemaschine handelt, befindet sich das Sägewerkzeug bzw. Sägeband üblicherweise in einem linear und/oder schwenkend bewegbaren Maschinenoberteil und läuft dort üblicherweise um mindestens zwei Umlenkrollen um, von denen mindestens eine angetrieben ist. Handelt es sich bei der Sägemaschine hingegen um eine Kreissägemaschine, so ist das Sägewerkzeug als Sägeblatt ausgebildet, das üblicherweise in einem schwenkbaren oder linear verschiebbaren Arm gelagert ist und an diesem rotiert.

Bei Kreissägemaschinen ist das Sägeblatt die instabilste Komponente, zumal das Sägeblatt möglichst schmal ausgebildet sein soll, um beim Sägeschnitt möglichst wenig Material zu zerspanen. Gleichzeitig soll der Sägeschnitt in möglichst engen Toleranzen maßhaltig sein, was insbesondere bei höheren Schnittgeschwindigkeiten zu einem Zielkonflikt mit der Randbedingung führt, ein möglichst dünnes Sägeblatt zu verwenden. Denn Sägeblätter neigen insbesondere bei zunehmendem Verschleiß beim Sägen zum Schrägziehen. Hinzu kommt, dass durch das Zerspanen des Werkstückmaterials Schwingungen im Sägeblatt erzeugt werden, die zu einem ungenauen Sägeschnitt führen können.

Um Schwingungen in einem Kreissägewerkzeug zu dämpfen, ist in der DE-A-196 53 242 vorgeschlagen worden, eine separate Dämpfungseinrichtung zu verwenden, die mit Hilfe eines Sensors einen Schwingungszustand des Kreissägewerkzeugs ermittelt und, basierend auf den ermittelten Schwingungsdaten, an einem in Bewegungsrichtung des Kreissägewerkzeugs nachgelagerten, vom Sensor beabstandeten Ort in passender Phasenlage eine Kraft auf das Kreissägewerkzeug ausübt, die der Schwingungsbewegung des Kreissägewerkzeugs entgegengesetzt ist. Dadurch wird eine aktive Bedämpfung von Schwingungen des Kreissägewerkzeugs erzielt.

Wie beispielsweise aus der EP-A-1 466 688 bekannt, ist es üblich, die beiden Seitenflächen des Sägeblatts einer Kreissägemaschine in der Nähe der Sägezähne mittels einer Führungseinrichtung zu führen, um ein Schrägziehen zu vermeiden und Schwingungsbewegungen zu dämpfen. Diese Führungseinrichtung besteht aus einer vorderen und einer hinteren Sägeblattführung, die jeweils mit Gleitstücken aus Hartmetall oder Keramik versehen sind und das Sägeblatt zwischen sich führen.

Bei Bandsägemaschinen, die ein um mindestens zwei Antriebs- bzw. Umlenkrollen umlaufendes Sägeband aufweisen, deren Rotationsachsen meist senkrecht zur Ebene des Sägeschnitts oder hierzu geneigt orientiert sind, ist es notwendig, das Sägeband vor seinem Eintritt in das zu sägende Werkstück sowie nach Verlassen desselben in die Ebene des Sägeschnitts zu drehen bzw. aus dieser Ebene in die Umlaufposition zurückzudrehen. Dies erfolgt mittels einer Führungseinrichtung, die üblicherweise aus zwei zangenartig ausgebildeten Halterungen besteht, welche vor dem Eintritt des Sägebands in das Werkstück und nach dem Austritt des Sägebands aus dem Werkstück angeordnet sind. In diesen zangenartigen Halterungen sind beidseits des Sägebandes Gleitstücke aus Hartmetall oder Keramik angebracht, die für eine seitliche Bandführung sorgen, während der Rücken des Sägebands oft über Rollen und/oder ebenfalls über Gleitstücke geführt wird. Ein Beispiel für eine solche Führungseinrichtung ist in der DE-A-198 28 589 offenbart.

Eine Führungseinrichtung gemäß dem Oberbegriff des Anspruchs 1 findet sich in der EP.A-2 492 036. Dort wird der Abstand zwischen zwei Gleitstücken, zwischen denen das Sägeband geführt wird, mittels Piezoaktoren eingestellt. Ein bewegliches Gleitstück kann zu einem feststehenden Gleitstück hin und von diesem weg bewegt werden, um das Sägeband leichter zwischen die Gleitstücke einbringen zu können. Durch den Piezoaktor wird nach dem Einsetzen des Sägebands das bewegliche Gleitstück zum feststehenden Gleitstück hin bewegt, um das Sägeband einzuklemmen, wonach es wieder ein kleines Stückchen zurück bewegt wird, um das für das Sägeband notwendige Spiel einzustellen.

Neben der Umlenkung des Sägebands, die je nach Art der Bandsägemaschine gegebenenfalls nicht notwendig ist, haben Führungseinrichtungen bei Bandsägemaschinen insbesondere die Aufgabe, ein Verziehen des Sägebands und ein seitliches Wegkippen des Sägebands durch den Schnittdruck zu verhindern sowie Schwingungen des Sägebands zu dämpfen, da solche Ausweichbewegungen und Schwingungen wiederum die Maßhaltigkeit des Sägeschnitts gefährden.

Den Führungseinrichtungen der vorliegenden Art, unabhängig davon, ob sie für eine Kreissägemaschine oder eine Bandsägemaschine vorgesehen sind, ist somit gemeinsam, dass sie mindestens eine Halterung mit mindestens einem Gleitstück und/oder mindestens einer Rolle für einen zumindest zeitweise gleitenden und/oder abrollenden Kontakt mit dem Sägeband oder Sägeblatt umfassen.

Insbesondere bei hohen Zerspanungsleistungen hat sich herausgestellt, dass herkömmliche Führungseinrichtungen sowohl für ein Sägeband einer Bandsägemaschine als auch für ein Sägeblatt einer Kreissägemaschine hinsichtlich der Dämpfung von Schwingungen des Sägebands oder Sägeblatts nicht in allen Anwendungen zu optimalen Ergebnissen führen.

Der vorliegenden Erfindung liegt daher die Aufgabe zugrunde, eine Führungseinrichtung der eingangs genannten Art sowie eine Sägemaschine mit einer solchen Führungseinrichtung vorzuschlagen, mit der bzw. bei der Schwingungen im Sägeband oder Sägeblatt effektiver gedämpft werden können.

Gelöst ist diese Aufgabe durch eine Führungseinrichtung mit den Merkmalen des Anspruchs 1 sowie durch eine Sägemaschine mit den Merkmalen des Anspruchs 10.

Bevorzugte Ausgestaltungen und Weiterbildungen der erfindungsgemäßen Führungseinrichtung sowie auch der erfindungsgemäßen Sägemaschine sind in den Ansprüchen 2 bis 9 niedergelegt.

Es wird vorgesehen, dass das mindestens eine Gleitstück und/oder die mindestens eine Rolle relativ zur Halterung bewegbar an der Halterung angebracht ist, und zwar bevorzugt im Wesentlichen senkrecht zu einer Bewegungsrichtung des Sägebands oder Sägeblatts, d.h. also im Wesentlichen zum Sägeband oder Sägeblatt hin und von diesem weg bewegbar. Diese Bewegung wird erfindungsgemäß durch mindestens einen Piezoaktor bewirkt.

Piezoaktoren enthalten piezoelektrische Materialien, wie beispielsweise Quarz oder Bariumtitanat und machen sich den piezoelektischen Effekt zunutze, mittels welchem durch Anlegen einer elektrischen Spannung eine Verformung der Kristallstruktur des piezoelektrischen Materials erfolgt. Piezoaktoren können auf diese Weise hohe mechanische Kräfte erzeugen und sich hierbei in sehr kurzer Zeit verformen, so dass durch entsprechendes Modulieren der angelegten Spannung Schwingungen mit Frequenzen im kHz-Bereich erzeugt werden können.

Durch diese Eigenschaft der erfindungsgemäß verwendeten Piezoaktoren ist es möglich, Schwingungen im Sägeband oder Sägeblatt, die das Sägeergebnis beeinträchtigen, aktiv zu dämpfen. So ist auch eine Steuereinheit zum Steuern und/oder Regeln der Bewegungen des mindestens einen Piezoaktors Teil der erfindungsgemäßen Führungseinrichtung, die beispielsweise einen Satz verschiedener Steuerprogramme zum Ansteuern des mindestens einen Piezoaktors enthält. Anhand von in die Steuereinheit einzugebenden Sägeparametern, wie z.B. das Profil und das Material des zu sägenden Werkstücks, oder die Form und das Material sowie die Bewegungsgeschwindigkeit des Sägebands oder Sägeblatts oder auch die Sägevorschubgeschwindigkeit wird ein Steuerprogramm ausgewählt, das Gegenschwingungsbewegungen des Piezoaktors erzeugt, um den beim Sägen mit den entsprechenden Sägeparametern typischerweise entstehenden Schwingungsbewegungen des Sägebands oder Sägeblatts entgegenzuwirken und/oder diese zu dämpfen.

Eine optimierte aktive Schwingungsdämpfung kann im Rahmen der erfindungsgemäßen Führungseinrichtung durch Auswerten von Signalen eines Sensors erzielt werden, der Schwingungsbewegungen des Sägebands oder Sägeblatts erfasst. Mit Hilfe eines entsprechenden Algorithmus kann die Steuereinheit aus den erfassten Schwingungsbewegungen des Sägebands oder Sägeblatts Gegenschwingungsbewegungen errechnen und mit dem erfindungsgemäßen Piezoaktor erzeugen, die eine optimierte aktive Schwingungsdämpfung gewährleisten.

Als Sensor zur Erfassung von Schwingungsbewegungen des Sägebands oder Sägeblatts wird der mindestens eine oder ein weiterer Piezoaktor als Sensor zur Erfassung von Schwingungsbewegungen verwendet, da der piezoelektrische Effekt in beide Richtungen funktioniert: Eine Verformung des piezoelektrischen Materials führt zu einer Veränderung der angelegten Spannung und umgekehrt.

Die Steuereinheit der Führungseinrichtung, die anhand von Sensorsignalen Gegenschwingungsbewegungen des mindestens einen Piezoaktors erzeugt, um eine aktive Schwingungsdämpfung zu optimieren, kann auch mit einem selbstlernenden Algorithmus ausgestattet sein, der die Sensorsignale als Erfolgskontrolle verwendet und die Gegenschwingungsbewegungen jeweils entsprechend selbstlernend anpasst.

Wenn mehrere Piezoaktoren in der Halterung der erfindungsgemäßen Führungseinrichtung vorhanden sind (was in der Regel der Fall sein wird), kann es vorteilhaft sein, die Steuereinheit so auszubilden, dass sie die verschiedenen Piezoaktoren unterschiedlich ansteuert. Je nach Schwingungsverhalten des Sägebands oder Sägeblatts kann dies zur Optimierung der aktiven Schwingungsdämpfung dienen.

Der erfindungsgemäß vorhandene, mindestens eine Piezoaktor ist bevorzugt direkt oder indirekt zwischen dem Gleitstück bzw. der Rolle und der Halterung angeordnet. Es kann hierbei vorteilhaft sein, den Piezoaktor mittels einer Hebelanordnung auf das Gleitstück bzw. die Rolle einwirken zu lassen. Mittels einer Hebelanordnung kann die Verformung bzw. der Stellweg des Piezoaktors übersetzt und damit vergrößert werden, und der Piezoaktor kann in einem gewissen Abstand vom Sägeband oder Sägeblatt angeordnet werden, was seine elektrische Kontaktierung vereinfachen kann.

Für die seitliche Führung eines Sägebands oder Sägeblatts sind in der Regel Gleitstücke vorgesehen, die mittels Piezoaktoren aktiv zum Sägeband bzw. Sägeblatt hin und von diesem weg bewegt werden können. Zum Schutz des Piezoaktors ist es hierbei bevorzugt, wenn die Gleitstücke auf Druckplatten angeordnet sind, welche relativ zur Halterung bewegt werden können. Die Piezoaktoren können dann zwischen den Druckplatten und der Halterung angeordnet sein, um die Druckplatte zu bewegen, während sie gleichzeitig von der Druckplatte gegen das Sägeband bzw. das Sägeblatt abgeschirmt werden.

Für die Führung des Sägebandrückens bei einer Bandsägemaschine ist es bevorzugt, eine Rolle zu verwenden, die in Lagern gehalten wird, welche direkt oder indirekt mittels mindestens eines Piezoaktors relativ zur Halterung bewegbar sind. Solche Lager können beispielsweise in einer gabelförmigen Lagerbrücke angeordnet sein, welche über Piezoaktoren mit der Halterung verbunden sind, wobei die Lagerbrücke wiederum die Piezoaktoren gegen das Sägeband abschirmt.

Zusätzlich zur Bewegbarkeit der Gleitstücke und/oder Rollen einer erfindungsgemäßen Führungseinrichtung mittels erfindungsgemäßer Piezoaktoren kann im Rahmen der vorliegenden Erfindung auch eine hydraulische Bewegbarkeit der Gleitstücke bzw. Rollen gegeben sein.

Ausführungsbeispiele für erfindungswesentliche Komponenten einer erfindungsgemäß ausgestalteten Führungseinrichtung werden im Folgenden anhand der beigefügten Zeichnungen näher beschrieben und erläutert. Es zeigen:
- Figur 1: eine schematische Explosionsdarstellung einer seitlichen Führung eines Sägebands;
- Figur 2: eine Schnittdarstellung in Draufsicht auf ein Sägeband mit zwei seitlichen Bandführungen gemäß Figur 1, in Ruheposition;
- Figur 3: eine Darstellung wie Figur 2, jedoch in angestellter Position der Bandführungen;
- Figur 4: eine schematische Explosionsdarstellung einer Rückenführung für ein Sägeband;
- Figur 5: eine schematische Schnittdarstellung der Rückenführung aus Figur 4 in Ruheposition;
- Figur 6: eine Darstellung wie Figur 5, jedoch in angestellter Position;
- Figur 7: eine schematische perspektivische Ansicht einer Führungseinrichtung für ein Sägeband, umfassend zwei seitliche Bandführungen und eine Rückenführung gemäß der vorhergehenden Figuren;
- Figur 8: eine Schnittdarstellung in Draufsicht auf ein Sägeband mit zwei seitlichen Bandführungen gemäß einem anderen Ausführungsbeispiel, in Ruheposition;
- Figur 9: eine Darstellung wie Figur 8, jedoch in angestellter Position der Bandführungen.

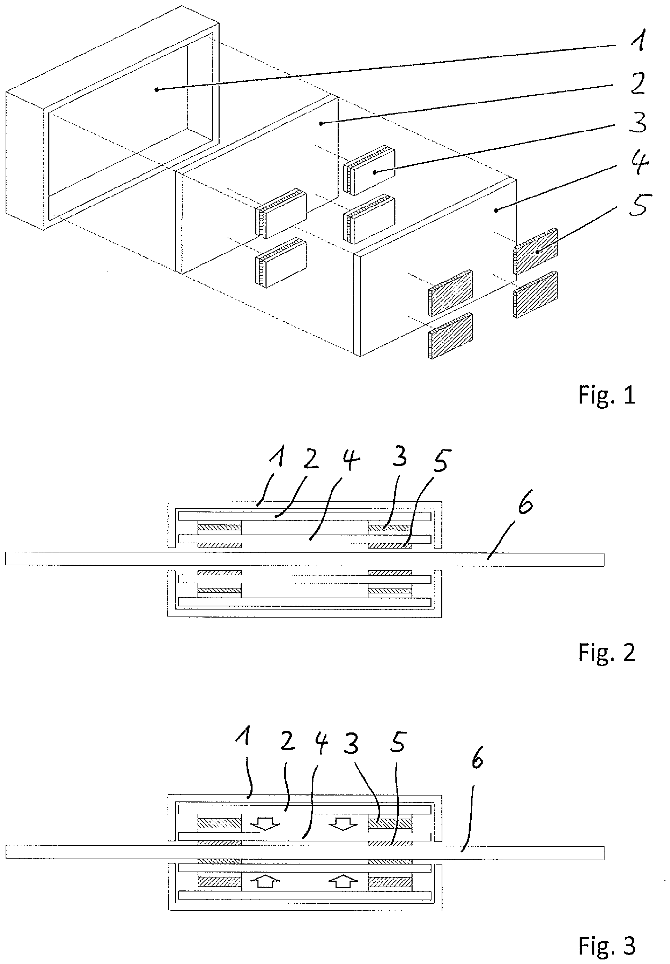

In der schematischen Explosionsdarstellung nach Figur 1 sind die wesentlichen Elemente eines ersten Ausführungsbeispiels einer erfindungsgemäß ausgestalteten seitlichen Bandführung für ein Sägeband einer Bandsägemaschine dargestellt. Es handelt sich um eine Halterung 1, eine Gegendruckplatte 2, vier Piezoaktoren 3, eine Druckplatte 4 und vier Gleitstücke 5.

Die Gleitstücke 5 sind fest mit der Druckplatte 4 verbunden und dazu vorgesehen, zumindest zeitweise in gleitenden Kontakt mit dem (hier nicht dargestellten) Sägeband zu gelangen. Sie bestehen aus Hartmetallplättchen. Die Druckplatte 4, auf der die Gleitstücke 5 sitzen, ist relativ zur Halterung 1 beweglich, um die Gleitstücke 5 an das Sägeband anstellen und von diesem abstellen zu können bzw. eine aktive Schwingungsdämpfung durchzuführen.

Die Piezoaktoren 3 sind einerseits fest an der Druckplatte 4 angebracht und andererseits fest mit der Gegendruckplatte 2 verbunden. Die Gegendruckplatte 2 sitzt ortsfest in der Halterung 1, während die Druckplatte 4 nicht mit der Halterung 1 verbunden ist, so dass die Piezoaktoren den Abstand zwischen der Gegendruckplatte 2 und der Druckplatte 4 entsprechend einer angelegten Spannung verändern (Figuren 2 und 3).

Zwischen der Gegendruckplatte 2 und der Druckplatte 4 können die Piezoaktoren 3 durch beispielsweise eine umlaufende O-Ring-Dichtung gekapselt werden, so dass sie von der Umgebung des Sägebands und insbesondere von einer üblicherweise verwendeten Kühl-Schmier-Emulsion nicht beeinträchtigt werden. Die elektrische Kontaktierung kann beispielsweise durch die Gegendruckplatte 2 hindurch erfolgen. Die Druckplatte 4 schirmt die Piezoaktoren 3 gleichzeitig mechanisch vom Sägeband ab. Die Halterung 1 weist die Form eines Gehäuses auf, das durch die Druckplatte 4 als Deckel im Wesentlichen geschlossen wird, so dass auch hierdurch eine Schutzwirkung für die Piezoaktoren 3 entsteht.

Da es sich beim vorliegenden Ausführungsbeispiel um vier räumlich verteilte Piezoaktoren 3 handelt, können diese gegebenenfalls auch unterschiedlich angesteuert werden, um verschiedenste Gegenschwingungsbewegungen der Gegendruckplatte 2 und damit der Gleitstücke 5 zu erzeugen. Wenn die Gegendruckplatte 2 lösbar in der Halterung 1 befestigt ist, können die Gegendruckplatte 2, die Druckplatte 4, die Piezoaktoren 3 und die Gleitstücke 5 als Modul ausgetauscht werden.

Die Figuren 2 und 3 zeigen die Funktionsweise der in Figur 1 dargestellten Führung, wobei jeweils im Schnitt ein Sägeband 6 dargestellt ist, dessen beide Seiten jeweils mit einer Führung aus Figur 1 versehen sind.

In Figur 2 ist eine Spannung an die Piezoaktoren 3 angelegt, mit der der Abstand zwischen der Gegendruckplatte 2 und der Druckplatte 4 minimal ist, so dass die auf der Druckplatte 4 befestigten Gleitstücke 5 vom Sägeband 6 abgestellt sind, also einen gewissen Abstand von diesem halten. Es ist hier gut erkennbar, dass die Piezoaktoren 3 durch die Halterung 1 und die Druckplatte 4 vom Sägeband 6 abgeschirmt sind.

In Figur 3 wird die an den Piezoaktoren 3 angelegte Spannung verändert, so dass sich diese verformen und den Abstand zwischen der Gegendruckplatte 2 und der Druckplatte 4 vergrößern (Pfeile). Dies führt dazu, dass die Gleitstücke 5 in Kontakt mit dem Sägeband 6 gelangen und dieses in gleitendem Kontakt führen. Die Piezoaktoren 3 können auch zu einer Gegenschwingungsbewegung angesteuert werden, um eine etwaige Schwingung des Sägebands 6 aktiv zu dämpfen.

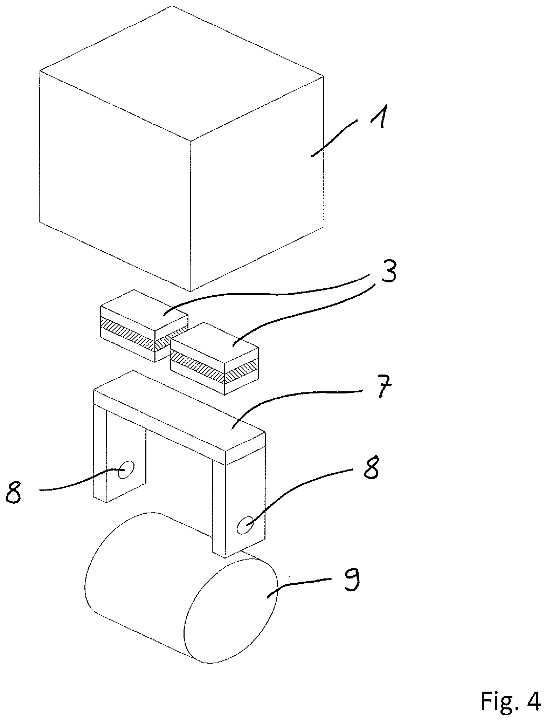

Figur 4 zeigt wiederum eine schematische Explosionsdarstellung, wobei als zweites Ausführungsbeispiel eine Rückenführung für ein (hier wiederum nicht dargestelltes) Sägeband gezeigt ist. Diese Rückenführung besteht in seinen wesentlichen Teilen aus einer Halterung 1, die vorliegend nahezu würfelförmig ausgebildet und unten offen ist, zwei Piezoaktoren 3, einer Lagerbrücke 7 mit Lagern 8 und einer Rolle 9, die in den Lagern 8 gelagert ist.

Die Piezoaktoren 3 sind einerseits fest mit dem Rücken der Lagerbrücke 7 verbunden und andererseits im Inneren der Halterung 1 befestigt, so dass eine piezoelektrische Formveränderung der Piezoaktoren 3 zu einer Relativbewegung der Lagerbrücke 7 und damit auch der Rolle 9 zur Halterung 1 führt.

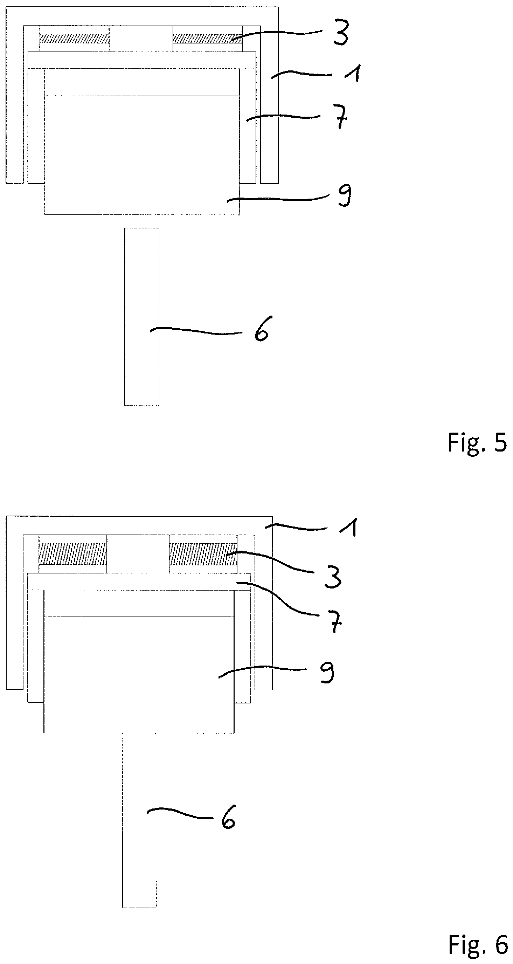

Solcherart kann die Rolle 9 an das Sägeband 6 angestellt und von diesem abgestellt werden, was anhand der Schnittdarstellungen in den Figuren 5 und 6 verdeutlicht wird. In Figur 5 ist wiederum an die Piezoaktoren 3 eine Spannung angelegt, die zu einem minimalen Abstand zwischen der Lagerbrücke 7 und der Halterung 1 führt, während in Figur 6 eine Spannung an die Piezoaktoren 3 angelegt ist, die diesen Abstand vergrößert und somit die Rolle 9 an den Rücken des Sägebands 6 anstellt, so dass die Rolle 9 hier in einem abrollenden Kontakt mit dem Sägeband 6 steht.

Die Figuren 5 und 6 verdeutlichen, dass die Piezoaktoren 3 einerseits durch die Lagerbrücke 7 und andererseits durch die Halterung 1 mechanisch vom Sägeband 6 abgeschirmt sind und gegebenenfalls eingekapselt werden können. Durch schnelle Veränderungen der Spannung, die an den Piezoaktoren 3 anliegt, können Gegenschwingungsbewegungen der Lagerbrücke 7 und damit der Rolle 9 erzeugt werden, um Schwingungen des Sägebands 6 aktiv zu dämpfen. Hierbei können gegebenenfalls die beiden Piezoaktoren 3 unterschiedlich angesteuert werden.

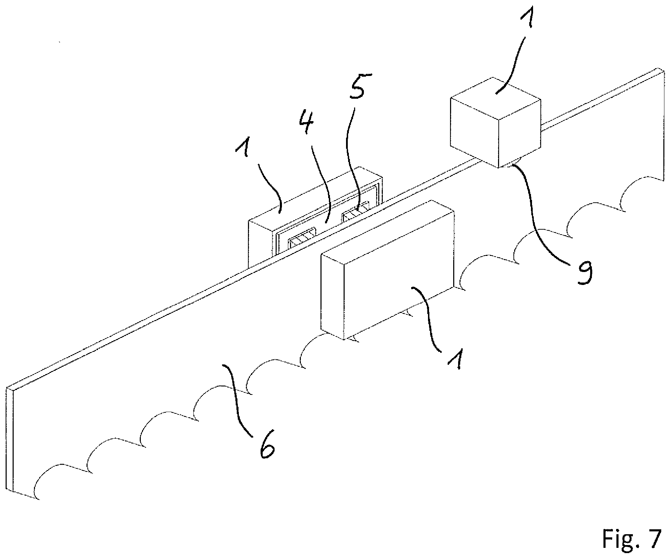

Die Figur 7 zeigt eine schematische perspektivische Darstellung eines Sägebands 6 einer (im Übrigen nicht dargestellten) Sägemaschine, wobei die in den vorhergehenden Figuren dargestellten Teile einer erfindungsgemäß ausgestalteten Führungseinrichtung einerseits zur seitlichen Führung des Sägebands 6 und andererseits zur Rückenführung verwendet werden. Von den seitlichen Führungen sind die Halterung 1, die Druckplatte 4 und die Gleitstücke 5 sichtbar; die Piezoaktoren 3 sind durch die Halterung 1 und die Druckplatte 4 eingehaust. Auch die in der Rückenführung enthaltenen Piezoaktoren sind in dieser Darstellung nicht sichtbar, sondern lediglich die Halterung 1 und die Rolle 9, die auf dem Rücken des Sägebands 6 abrollt und diesen führt.

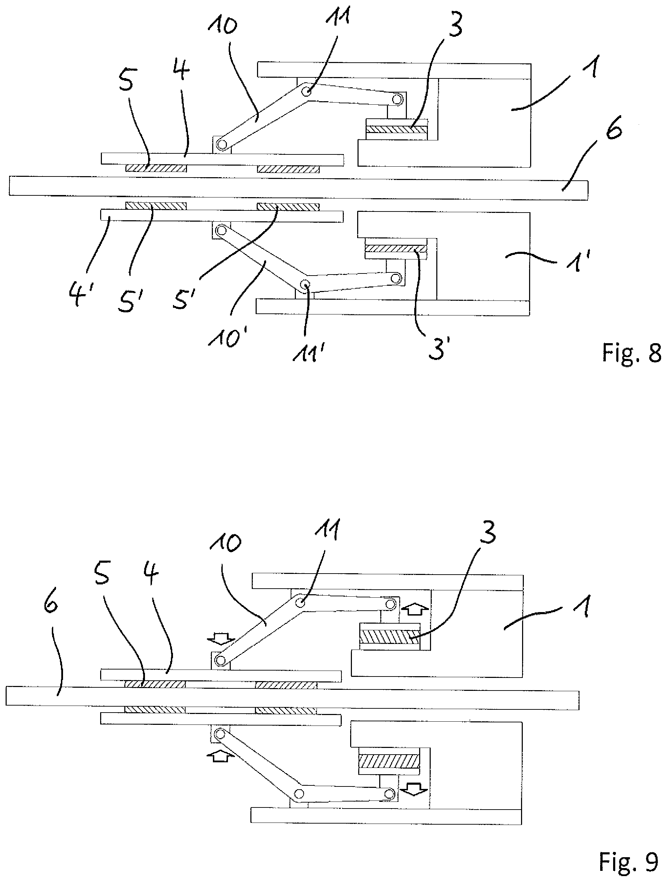

In den Figuren 8 und 9 ist wiederum, wie in den Figuren 2 und 3, eine Draufsicht auf ein Sägeband 6 dargestellt, dessen beide Seiten jeweils mit einer erfindungsgemäß ausgestalteten Führung geführt werden. Diese Führungen unterscheiden sich von denjenigen, die in den vorhergehenden Figuren dargestellt sind, und sie verkörpern ein anderes Ausführungsbeispiel der vorliegenden Erfindung:
Bei diesem, in den Figuren 8 und 9 dargestellten Ausführungsbeispiel sind die Gleistücke 5, 5' der beiden Führungen wiederum auf einer Druckplatte 4, 4' angeordnet. Die Piezoaktoren 3, 3' sind jedoch von den Gleitstücken 5, 5' und den Druckplatten 4, 4' beabstandet in der Halterung 1, 1' befestigt und wirken über eine Hebelanordnung 10 auf die Druckplatten 4, 4' und die Gleitstücke 5, 5' ein. Die Hebelanordnung 10 ist wippenartig über ein Drehgelenk 11 an der Halterung 1 schwenkbar befestigt, wobei die Hebelarme einerseits gelenkig mit den Piezoaktoren 3 und andererseits gelenkig mit der Druckplatte 4 verbunden sind.

In Figur 8 ist die abgestellte Position bzw. Ruheposition der Führung dargestellt. Hier ist eine Spannung solcherart an die Piezoaktoren 3 angelegt, dass sie eine minimale Dicke aufweisen und hierdurch über die Hebelanordnung 10 bewirken, dass die Druckplatte 4 und damit die darauf befestigten Gleitstücke 5 vom Sägeband 6 abgehoben sind.

In Figur 9 wurde die an die Piezoaktoren 3 angelegte Spannung verändert, so dass sich diese verformt haben. Hierdurch wurde die Hebelanordnung 10 bewegt (Pfeile) und die Druckplatte 4 bzw. die darauf befestigten Gleitstücke 5 an das Sägeband 6 angestellt, um dieses in gleitendem Kontakt zu führen.

Mittels der Hebelanordnung 10 sind die Piezoaktoren 3 und somit auch deren elektrische Kontaktierung vom Sägeband 6 und den Gleitstücken 5 sowie der dort in der Regel notwendigen Schmierung durch eine Kühl-Schmier-Emulsion beabstandet. Die Piezoaktoren 3 sind somit vorteilhafterweise der rauen Umgebung des Sägebands 6 und der Gleitstücke 5 nicht ausgesetzt.

## Patentansprüche

1. Führungseinrichtung für ein Sägeband oder Sägeblatt einer Sägemaschine, umfassend mindestens eine Halterung (1) mit mindestens einem Gleitstück (5) und/oder mindestens einer Rolle (9) für einen zumindest zeitweisen gleitenden und/oder abrollenden Kontakt mit dem Sägeband (6) oder Sägeblatt,
wobei das mindestens eine Gleitstück (5) und/oder die mindestens eine Rolle (9) relativ zur Halterung (1) bewegbar an der Halterung (1) angebracht ist,
und wobei das mindestens eine Gleitstück (5) und/oder die mindestens eine Rolle (9) mittels mindestens eines Piezoaktors (3) relativ zur Halterung (1) bewegbar ist,
**dadurch gekennzeichnet,**
**dass** die Führungseinrichtung außerdem mindestens einen Sensor zur Erfassung von Schwingungsbewegungen des Sägebands (6) oder Sägeblatts umfasst,
wobei der mindestens eine Piezoaktor (3) oder ein weiterer Piezoaktor auch als Sensor zur Erfassung von Schwingungsbewegungen des Sägebands (6) oder Sägeblatts ausgebildet ist,
und **dass** die Führungseinrichtung außerdem eine Steuereinheit zum Steuern und/oder Regeln der Bewegungen des mindestens einen Piezoaktors (3) umfasst,
wobei die Steuereinheit so ausgestaltet ist, dass sie anhand der Signale des mindestens einen Sensors Gegenschwingungsbewegungen des mindestens einen Piezoaktors (3) erzeugt, um beim Sägen entstehenden Schwingungsbewegungen des Sägebands (6) oder Sägeblatts entgegenzuwirken oder diese zu dämpfen.

2. Führungseinrichtung nach Anspruch 1, wobei der mindestens eine Piezoaktor (3) direkt oder indirekt zwischen dem Gleitstück (5) oder der Rolle (9) und der Halterung (1) angeordnet ist.

3. Führungseinrichtung nach Anspruch 1, wobei der mindestens eine Piezoaktor (3) mittels einer Hebelanordnung (10) auf das Gleitstück (5) oder die Rolle (9) einwirkt.

4. Führungseinrichtung nach mindestens einem der Ansprüche 1 bis 3, wobei für zumindest eine Seite des Sägebands (6) oder Sägeblatts eine relativ zur Halterung (1) bewegbare Druckplatte (4) in der Halterung (1) vorgesehen ist, auf der ein oder mehrere Gleitstücke (5) für einen zumindest zeitweisen gleitenden Kontakt mit dem Sägeband (6) oder Sägeblatt befestigt sind, wobei die Druckplatte (4) über einen oder mehrere Piezoaktoren (3) an der Halterung (1) angebracht ist.

5. Führungseinrichtung nach mindestens einem der Ansprüche 1 bis 3, die für ein Sägeband (6) vorgesehen ist und eine Halterung (1) aufweist, die mit Lagern (8) für eine Rolle (9) für einen zumindest zeitweisen abrollenden Kontakt mit dem Sägebandrücken versehen ist, wobei die Lager (8) direkt oder indirekt mittels mindestens eines Piezoaktors (3) relativ zur Halterung (1) bewegbar sind.

6. Führungseinrichtung nach mindestens einem der Ansprüche 1 bis 5, wobei die Steuereinheit einen Satz verschiedener Steuerprogramme zum Ansteuern des mindestens einen Piezoaktors (3) enthält, die durch Eingeben von Sägeparametern auswählbar sind und mittels denen eine Gegenschwingungsbewegung des Piezoaktors (3) erzeugbar ist, um beim Sägen entstehenden Schwingungsbewegungen des Sägebands (6) oder Sägeblatts entgegenzuwirken oder diese zu dämpfen.

7. Führungseinrichtung nach mindestens einem der Ansprüche 1 bis 6, wobei mehrere Piezoaktoren (3) vorhanden sind und die Steuereinheit so ausgebildet ist, dass sie die Piezoaktoren (3) unterschiedlich ansteuert.

8. Führungseinrichtung nach mindestens einem der Ansprüche 1 bis 7, wobei die Steuereinheit mit einem selbstlernenden Algorithmus ausgestattet ist, der die vom mindestens einen Sensor erhaltenen Signale als Erfolgskontrolle verwendet.

9. Führungseinrichtung nach mindestens einem der Ansprüche 1 bis 8, wobei zusätzlich zum Piezoaktor (3) eine hydraulische Bewegbarkeit des mindestens einen Gleitstücks (5) und/oder der mindestens einen Rolle (9) vorgesehen ist.

10. Sägemaschine zum Sägen von insbesondere metallischen und/oder mineralischen Werkstücken, mit einem zum Sägen umlaufend angetriebenen und relativ zu einem Werkstück bewegbaren Sägeband (6) oder Sägeblatt, **gekennzeichnet durch** eine Führungseinrichtung nach mindestens einem der Ansprüche 1 bis 9.

## Claims

1. Guide device for a bandsaw blade or saw blade of a sawing machine, comprising at least one holder (1) having at least one slide block (5) and/or at least one roller (9) for at least intermittent sliding and/or rolling contact with the bandsaw blade (6) or the saw blade,
wherein the at least one slide block (5) and/or the at least one roller (9) is mounted on the holder (1) so as to be movable relative to the holder (1),
and wherein the at least one slide block (5) and/or the at least one roller (9) is movable relative to the holder (1) by means of at least one piezo actuator (3),
**characterised in that**
the guide device also comprises at least one sensor for detecting vibratory movements of the bandsaw blade (6) or saw blade,
wherein the at least one piezo actuator (3) or a further piezo actuator is also in the form of a sensor for detecting vibratory movements of the bandsaw blade (6) or saw blade,
and the guide device also comprises a control unit for effecting open-loop and/or closed-loop control of the movements of the at least one piezo actuator,
wherein the control unit is configured so that on the basis of the signals of the at least one sensor it generates counter-vibratory movements of the at least one piezo actuator (3) in order to counteract or dampen vibratory movements of the bandsaw blade (6) or saw blade occurring during sawing.

2. Guide device according to claim 1, wherein the at least one piezo actuator (3) is arranged directly or indirectly between the slide block (5) or the roller (9) and the holder (1).

3. Guide device according to claim 1, wherein the at least one piezo actuator (3) acts on the slide block (5) or the roller (9) by means of a lever arrangement (10).

4. Guide device according to at least one of claims 1 to 3, wherein for at least one side of the bandsaw blade (6) or saw blade there is provided in the holder (1) a pressure plate (4) which is movable relative to the holder (1) and to which there are attached one or more slide blocks (5) for at least intermittent sliding contact with the bandsaw blade (6) or saw blade, the pressure plate (4) being mounted on the holder (1) via one or more piezo actuators (3).

5. Guide device according to at least one of claims 1 to 3, which is intended for a bandsaw blade (6) and has a holder (1) which is provided with bearings (8) for a roller (9) for at least intermittent rolling contact with the back of the saw blade, the bearings (8) being movable relative to the holder (1) directly or indirectly by means of at least one piezo actuator (3).

6. Guide device according to at least one of claims 1 to 5, wherein the control unit contains a set of different control programs for actuating the at least one piezo actuator (3), which programs are selectable by inputting sawing parameters and by means of which a counter-vibratory movement of the piezo actuator (3) can be generated in order to counteract or dampen vibratory movements of the bandsaw blade (6) or saw blade occurring during sawing.

7. Guide device according to at least one of claims 1 to 6, wherein a plurality of piezo actuators (3) are provided and the control unit is configured so that it actuates the piezo actuators (3) differently.

8. Guide device according to at least one of claims 1 to 7, wherein the control unit is equipped with a self-learning algorithm which uses the signals received from at least one sensor to measure success.

9. Guide device according to at least one of claims 1 to 8, wherein, in addition to the piezo actuator (3), hydraulic movability of the at least one slide block (5) and/or the at least one roller (9) is provided.

10. Sawing machine for sawing especially metal and/or mineral workpieces, having a bandsaw blade (6) or saw blade which, for sawing, is driven in circulation and is movable relative to a workpiece, **characterised by** a guide device according to at least one of claims 1 to 9.

## Revendications

1. Dispositif de guidage destiné à un ruban de sciage ou à une lame de scie d'une machine à scier, comprenant au moins un support (1) muni d'au moins une pièce coulissante (5) et/ou d'au moins un rouleau (9) conçu(e)(s) pour instaurer, au moins temporairement, un contact par glissement et/ou par roulement avec ledit ruban de sciage (6) ou ladite lame de scie,
sachant que la pièce coulissante (5) à présence minimale, et/ou le rouleau (9) à présence minimale, est (sont) installé(e)(s) sur le support (1) avec faculté de mouvement vis-à-vis dudit support (1),
et sachant que ladite pièce coulissante (5) à présence minimale, et/ou ledit rouleau (9) à présence minimale, est (sont) mobile(s) vis-à-vis dudit support (1) à l'aide d'au moins un actionneur piézo-électrique (3),
**caractérisé par le fait**
**que** ledit dispositif de guidage inclut, en outre, au moins un capteur affecté à la détection de mouvements vibratoires du ruban de sciage (6) ou de la lame de scie,
l'actionneur piézo-électrique (3) à présence minimale, ou un actionneur piézo-électrique supplémentaire, étant lui aussi réalisé sous la forme d'un capteur affecté à la détection de mouvements vibratoires dudit ruban de sciage (6) ou de ladite lame de scie ;
et par le fait que ledit dispositif de guidage inclut, par ailleurs, une unité de commande conçue pour commander et/ou pour réguler les mouvements dudit actionneur piézo-électrique (3) à présence minimale,
laquelle unité de commande est agencée de façon telle qu'elle produise des mouvements vibratoires antagonistes dudit actionneur piézo-électrique (3) à présence minimale, sur la base des signaux dudit capteur à présence minimale, afin de contrecarrer des mouvements vibratoires dudit ruban de sciage (6) ou de ladite lame de scie, engendrés au cours du sciage, ou d'amortir lesdits mouvements.

2. Dispositif de guidage selon la revendication 1, dans lequel l'actionneur piézo-électrique (3) à présence minimale est interposé directement ou indirectement entre la pièce coulissante (5) ou le rouleau (9), et le support (1).

3. Dispositif de guidage selon la revendication 1, dans lequel l'actionneur piézo-électrique (3), à présence minimale, agit sur la pièce coulissante (5) ou sur le rouleau (9) au moyen d'un ensemble à levier (10).

4. Dispositif de guidage selon au moins l'une des revendications 1 à 3, dans lequel une platine de pression (4) mobile vis-à-vis du support (1), sur laquelle une ou plusieurs pièce(s) coulissante(s) (5) est (sont) fixée(s) en vue d'instaurer, au moins temporairement, un contact par glissement avec le ruban de sciage (6) ou la lame de scie, est prévue dans ledit support (1) pour au moins un côté dudit ruban de sciage (6) ou de ladite lame de scie, ladite platine de pression (4) étant installée sur ledit support (1) par l'intermédiaire d'un ou plusieurs actionneur(s) piézo-électrique(s) (3).

5. Dispositif de guidage selon au moins l'une des revendications 1 à 3, prévu pour un ruban de sciage (6) et muni d'un support (1) doté de paliers (8) dédiés à un rouleau (9) afin d'instaurer, au moins temporairement, un contact par roulement avec le dos dudit ruban de sciage, lesdits paliers (8) pouvant être mus directement ou indirectement, vis-à-vis dudit support (1), à l'aide d'au moins un actionneur piézo-électrique (3).

6. Dispositif de guidage selon au moins l'une des revendications 1 à 5, dans lequel l'unité de commande renferme un jeu de programmes de commande différents qui sont affectés au pilotage de l'actionneur piézo-électrique (3) à présence minimale, peuvent être sélectionnés par entrée de paramètres de sciage, et au moyen desquels un mouvement vibratoire antagoniste dudit actionneur piézo-électrique (3) peut être produit en vue de contrecarrer des mouvements vibratoires du ruban de sciage (6) ou de la lame de scie, engendrés au cours du sciage, ou d'amortir lesdits mouvements.

7. Dispositif de guidage selon au moins l'une des revendications 1 à 6, dans lequel plusieurs actionneurs piézo-électriques (3) sont présents, et l'unité de commande est réalisée de telle sorte qu'elle pilote différemment lesdits actionneurs piézo-électriques (3).

8. Dispositif de guidage selon au moins l'une des revendications 1 à 7, dans lequel l'unité de commande est pourvue d'un algorithme d'auto-apprentissage qui utilise, en tant que contrôle de réussite, les signaux reçus par le capteur à présence minimale.

9. Dispositif de guidage selon au moins l'une des revendications 1 à 8, dans lequel une mobilité hydraulique de la pièce coulissante (5) à présence minimale, et/ou du rouleau (9) à présence minimale, est prévue en plus de l'actionneur piézo-électrique (3).

10. Machine dévolue au sciage de pièces notamment métalliques et/ou minérales, équipée d'un ruban de sciage (6) ou d'une lame de scie entraîné(e) en rotation et mobile par rapport à une pièce, **caractérisée par** un dispositif de guidage conforme à au moins l'une des revendications 1 à 9.
